# EUROPEAN PATENT SPECIFICATION

(11) **EP 3 754 308 B1**
(45) Date of publication and mention of the grant of the patent: **16.08.2023**
(21) Application number: 19181004.3
(22) Date of filing: 18.06.2019
(51) Int. Cl.: G01F 23/263, G01F 23/80, G01F 23/00

(54) **SENSOR SYSTEM**
SENSORSYSTEM
SYSTÈME DE CAPTEUR

(43) Date of publication of application: 23.12.2020
(73) Proprietor: Baumer A/S, 8210 Arhus (DK)
(72) Inventor: Jensen, Kurt Möller, 8700 Horsens (DK); Jacobsen, Kasper Kirkeby, 8000 Aarhus C (DK); Ejlersen, Finn, 7500 Holstebro (DK)
(74) Representative: Strauss, Steffen

(56) References cited:
- WO-A1-2018/043664
- US-A- 5 739 598
- US-A- 5 756 876
- US-A1- 2002 178 808
- US-A1- 2017 176 234
- US-A1- 2018 372 525
- US-B2- 8 789 414

## Description

The invention relates to a sensor system for detecting a level change in a reservoir and a method.

Sensors may be used to detect the level of a medium in a reservoir. The medium may be water, oil, other beverages but also less liquid media like marmalade or the like. The medium can also consist of solid particles like sugar, sand or cereal products.

It's a general problem in the industry that the abilities of a sensor used in various places have to be configured for each application and/or for each medium to be measured. For level sensors which can't be configured, the ability of differentiate on different media isn't most likely present today. It may be necessary to use other instruments as for example a conductivity transmitter or a turbidity meter.

For detecting different media, the sensor is used to be adapted manually to the specific medium. This means that a sensor is configured to recognize a certain event or medium. A reconfiguration may be complex.

Document US8789414B2 discloses a level sensing apparatus detecting the level of a detected material, the apparatus including a circuit board, a first electrode and a second electrode having different dimensions, which are formed on one surface and the other surface of the circuit board as well as a judgment unit electrically connected with the first electrode and the second electrode through the circuit board to judge the level of the detected material.

Document US20170176234A1 discloses a method for detecting water level in a water tank that includes a probe voltage value acquiring step comprising periodically acquiring a probe voltage value as a probe voltage value; a voltage value comparing step that compares the probe voltage value with a stored voltage threshold value, wherein the voltage threshold value can be updated response to water data and waterless data.

It is an object of the invention to provide an improved concept for detecting a level change in a reservoir, like a tank or a pipe.

This object is achieved by the features of the independent claims. Further implementation forms are apparent from the dependent claims, the description and the figures.

The invention is based on the finding that an adaptive trigger value that follows a measured value may be used to detect changes in the level of the medium without the need of manual setting the trigger value for each different medium that should be measured.

According to a first aspect the object is solved by a sensor system according to claim 1.

The sensor system may adapt the trigger value to all kind of media without configuration or knowledge of the media feasibility. The only input needed is the measured value, i.e. a scaled value of the media, based on the sensor that measures the media. The sensor may be a measuring circuit. With the sensor system various media may be detected without manual configuration of the sensor system. The adaptive trigger value is set by the control unit during operation of the sensor system. The control unit may be part of the sensor. The control unit may be included in a housing of the sensor. The control unit may also be arranged separately. A trigger setup can be performed automatically.

Some applications involve different media which demands different trigger settings. Reconfiguration of the sensor system may be performed often and automatically. It is not necessary to know when each setting should be used or the characteristics of any possible media.

Different media may change characteristics from lot to lot, therefore different trigger settings might be demanded from lot to lot to ensure correct detection of a level switch.

The sensor according to the invention is a capacitive sensor, configured to measure a capacitance of a medium at a sensor tip. According to other examples not part of the claimed invention the sensor can be a temperature, an inductive, a pressure or an optical switch.

The control unit provides an adaptive trigger. The sensor system may be used for any media.

In an implementation form, the level sensor is a level switch configured to indicate if a tip of the level switch is covered by the medium, in particular to measure a capacitance at the tip. The sensor may be a level switch configured to measure the medium in front of a sensor tip of the sensor, in particular by measuring the capacity at the tip.

In an implementation form, the control unit is configured to set the trigger value at a predetermined distance to the measured value, in particular with a distance of 5% of a maximum of the measured value.

The measured value may be in a steady state after a level change. The trigger value may be set at a distance the measured value. Therefore, a further level change can be detected when the measured value crosses the trigger value again.

In an implementation form, the control unit is configured to adapt the trigger value after an increase of the measured value or after a decrease of the measured value.

The control unit may detect a decrease or an increase of the measured value. The increase or the decrease may indicate a level change of the medium.

When the measured value starts changing the virtual trigger would start to move towards the measured level, in particular after a predetermined time or after the measured value is steady again. The trigger level will stop at an determined amount above the measured level and get fixed after a certain time of steady measurements. When the level of the trigger doesn't change any longer and is fixed, the hysteresis starts changing. It may be implemented in a way where the hysteresis may be determined to a start amount in that moves up to a higher amount above the measured level. In one embodiment the trigger level can stop 3% above the measured level. The hysteresis may first be 0.5% and then move up to 3%.

In an implementation form, the control unit is configured to set the trigger value below the measured value, if the measured value increased at the last level change.

If the measured value falls again, a level change can be detected.

In an implementation form, the control unit is configured to set the trigger value above the measured value, if the measured value decreased at the last level change.

If the measured value rises again, a level change can be detected.

In an implementation form, the control unit is configured to adapt the trigger value when the measured value has been constant for a predetermined number of measured values.

When the measured value goes below the trigger value, i.e. the adaptive trigger level, and the measured value is considered as steady, the trigger will turn on. When the trigger is fixed it becomes the functional trigger.

The level of the medium may be determined to be steady based on a determined amount of last samples. If the peak-peak difference between to following measured values is less than a determined value, e.g. 2%, the medium is steady and the sensor system can trigger a level change again.

In an implementation form, the control unit is configured to sum up a time while the measured value is above a steady value and to indicate a level change when the sum rises above a predetermined threshold.

In different processes, it's a demand to detect air bubbles. The measured value may be set as a relative value after it is constant. After this, any change of the measured value may cause summing up a time value to indicate changes, in particular air bubbles. Therefore, it is possible to detect air bubbles or air pockets in pipes or angels in pipes.

Also detecting a media change or inhomogeneous media in pipes is possible, dependent on the kind of the measured value, in particular if the sensor comprises a capacity sensor tip and a different dielectric value is measured.

With such a sensor system it is possible to adjust the sensitivity or measurement time of the sensor system.

In an implementation form, the control unit is configured to stop indicating the level change after a predetermined time and no level change was detected within the predetermined time.

When no level change happened and a level change was indicated according to the sum of measured values rising above the threshold, indicating bubbles, the control unit again indicates the level from before the bubbles were detected.

According to a second aspect of the invention, the object is solved by a method for detecting a level change in a reservoir according to claim 10.

In an implementation form, adapting the trigger value comprises adapting the trigger value to follow the measured value after the measured value was constant for a predetermined number of measured values.

In an implementation form, adapting the trigger value comprises setting the trigger value to a value above the measured value upon detecting a decrease of the measured value.

In an implementation form, adapting the trigger value comprises setting the trigger value to a value below the measured value upon detecting an increase of the measured value.

In an implementation form, the method comprises summing up a time while the measured value is above a steady value and outputting a warning signal, when the sum rises above a predetermined threshold.

An additional trigger value is given by the integration of time where the curve is higher than the media value. It is also possible to integrate the measured value, respectively.

The sum is generated over an accumulation time that defines in which time length the integration is performed. A detection time is the time the output keeps on ensuring the sensor system identifies a bubble. If the additional trigger value crosses the predetermined threshold, a specific amount of air was detected within a specified sample time.

In an implementation form, the warning signal is configured to control a bubble elimination arrangement configured to eliminate bubbles, in particular to control a valve to open.

It may be possible to ventilate bubbles out of the pipe, for example by using a valve. A Sensor system using the method is able to detect air bubbles and control a ventilation valve or stop the process to prevent further damages or unexpected behavior in the following process.

Implementation forms of the invention will be described with respect to the following figures, in which:
- Fig. 1a: shows a schematic diagram of an arrangement with a sensor system according to an embodiment;
- Fig. 1b: shows another schematic diagram of the an arrangement with the sensor system according to the embodiment of Fig. 1a;
- Fig. 2: shows a graph with values related to the sensor system according to the embodiment of Fig. 1a and 1b;
- Fig. 3: shows a schematic diagram of an arrangement with a sensor system according to another embodiment;
- Fig. 4: shows a graph with values related to the sensor system according to the embodiment of Fig. 3;
- Fig. 5: shows a schematic diagram of an arrangement with a sensor system according to another embodiment;
- Fig. 6: shows a graph related to the sensor system according to the embodiment of Fig. 5;
- Fig. 7: shows another graph with values related to the sensor system according to the embodiment of Fig. 5;
- Fig. 8: shows another graph with values related to the sensor system according to the embodiment of Fig. 5;
- Fig. 9: shows a flowchart of a method according to an embodiment.

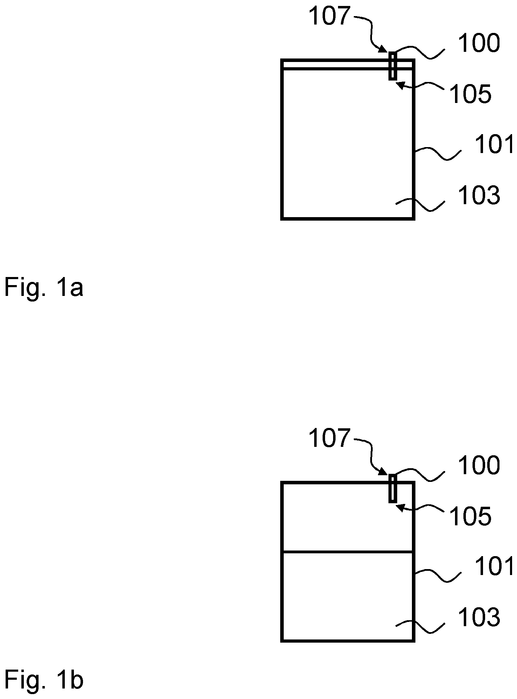

Fig. 1a and 1b show a sensor system 100 located at a reservoir 101, the reservoir 101 comprising a medium 103. In Fig. 1a the reservoir 101 is full and in Fig. 1b the reservoir is half full.

The sensor system 100 comprises a sensor 105, in particular a level sensor, further in particular a level switch, with a tip configured to measure a capacity. When the level of the medium 103 in the reservoir 101 is high enough to cover the sensor 105, the sensor system 100 measures the capacity of the medium, as shown in Fig. 1a. Does the medium not reach the sensor 105, the sensor 150 measures for example air, as shown in Fig. 1b. In other cases, the tip of the sensor 105 is still covered with the medium and the sensor 105 measures the capacity of the rest of the medium on the tip. The capacity that is measured may be dependent on the amount of medium 103 at the tip of the sensor 105, i.e. if the sensor is fully covered or not. In another embodiment, the sensor 105 is configured to measure other values.

The values that are measured by the sensor 105 are a measured value. Therefore, the measured value indicates the level of the medium 103 in the reservoir 101.

The sensor system 100 comprises a control unit 107. The control unit 107 is included into a housing of the sensor 105. In another embodiment, the control unit 107 is located separately, in particular the control unit is a computer system connected to the sensor 105.

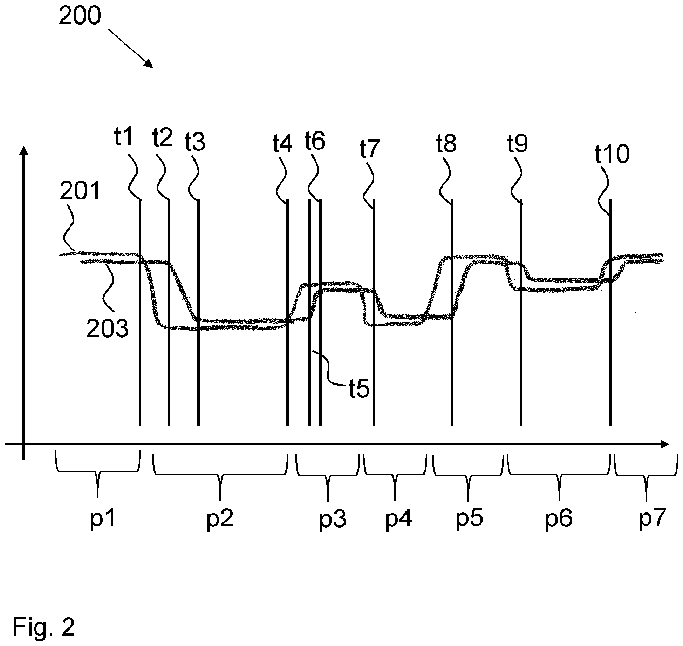

Fig. 2 shows a graph 200 showing two different values over time. The axis of abscissas relates to the time. The axis of ordinate relates to the values shown in the graph 200.

A line 201 represents the measured value, measured by the sensor 105. A second line 203 represents a trigger value, used by the control unit 107 to detect a level change.

The control unit 107 is configured to detect a level change of the medium 103, when the measured value crosses the trigger value. That is, if the measured value is high, and falls below the trigger value, a level change is detected and if the measured value is low and rises above the trigger value, also a level change of the medium 103 is detected.

Therefore, at a start time before t1, the trigger value is set below the measured value. At the point t1, a first medium is introduced into the reservoir 105 and covers the tip of the sensor 105. Therefore, the measured value, i.e. the capacity measured by the sensor 105, falls. At time t2, the measured value has fallen to a low value.

The control unit 107 detects that the level of the medium has changed when the measured value crosses the trigger value. At time t2, the control unit adapts the trigger value to follow the measured value, until, at time t3, the trigger value again is constant and fixed in a predetermined distance to the measured value. The time between t1 and t2 is a trigger delay, that is a time that the control unit 107 waits until the trigger value is adapted. With higher changes in the measured value, the trigger delay may be bigger.

The control unit 107 is configured to adapt the trigger, when the measured value is steady. Steady means for example, that a difference of measured values is lower than 2%. In another embodiment, the steady criterium is set higher or lower.

The sensor 105 provides a value for the measured value every 20 ms. In another embodiment, this value may differ.

The control unit 107 is configured to recognize a steady measured value, if the measured value is steady for 100 measurement. In another example, 200 or another number of measurements have to be steady or a predetermined time has to pass.

Fig. 2 shows seven phases p1 to p7 of the graph 200. In phase p1, the reservoir 101 is empty, that means the reservoir is filled with air only. In phase p2, the reservoir is filled with a first medium, for example a sticky medium like a cream comprising a low capacity. In phase p1 the measured value is at 95% and in phase p2 the measured value is at 15%. In another embodiment, absolute values are used or other percental values are measured.

After a time t4 the sensor 105 measures an increase of the capacity until a maximum of 60%. Therefore, at time t4, the control unit 107 detects the increase of the measured value above the trigger value and recognizes a level change. In this case, the reservoir 101 empties. Because the first medium was sticky, still some rest of the first medium sticks to the sensor 105. Therefore, the measured value does not rise back to 95% as in phase p1.

After the time t4, the control unit 107 waits until the measured value is steady again at time t5 and then raises the trigger value to the trigger distance, that is the predetermined modulus of the difference between the measured value and the trigger value when the trigger value is fixed and the control unit 107 ready to detect another level change of the medium 103. At time t6 the trigger value reaches the trigger distance and is fixed.

In phase p3, the reservoir 101 is again filled with air but still comprises rests of the sticky first medium, in particular at the walls of the reservoir and on the sensor 105.

In the following phase p4, a cleaning liquid, for example CIP, is introduced into the reservoir 101. The measured value again falls to 15% and the trigger value follows at time t7. After the cleaning phase p4, the reservoir is emptied of the cleaning liquid and in phase p5 the reservoir is again filled with air but without rests of the first liquid or the cleaning liquid. A respective steady state of the measured value is detected at time t8 and the trigger follows up.

In phase p6 the reservoir is filled with a second liquid, for example oil. The measured value falls to about 55%, dependent on the dielectric features of the second liquid. This is steady at time t9 and the trigger again falls, following again the measured value to the trigger distance.

In phase p7, the reservoir is emptied of the second liquid and the measured value rises. This is detected when the measured value rises above the trigger value and the trigger value follow the measured value again at time t10.

Therefore, as long as the difference in the measured value of two consecutive media is bigger than the trigger distance between the fixed trigger value and the measured value, a level change can be detected, independently from the kind of the medium and without setting specific trigger values for each different medium.

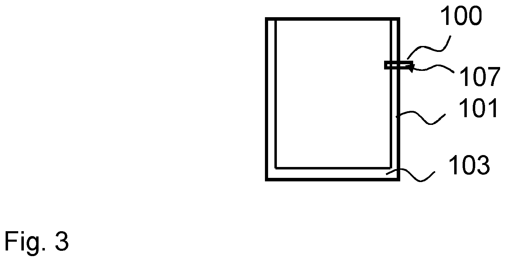

Fig. 3 show an arrangement of the sensor system 100 of Fig. 1a and Fig. 1b at another place of the reservoir 101. According to this embodiment, the sensor system 100 is located in a wall of the reservoir 101. While the above functionality is still provided, the sensor 105 may also detect liquids flowing down the wall of the reservoir 101.

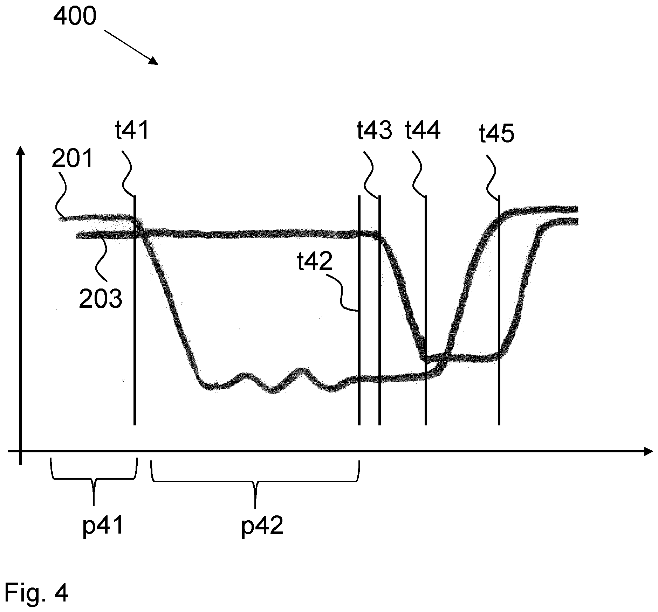

Fig. 4 shows a graph 400. As explained with respect to Fig. 2, a first line 201 indicates a measured value of the sensor 105 and a second line 203 indicates the trigger value provided by the control unit 107.

The graph 400 shows a phase where for example cleaning liquid is running down a wall of the reservoir 101. While running down the wall, the liquid also flows over the sensor 105, located in the wall. In Phase p41, no liquid is in the reservoir 101. In phase p42, the liquid is introduced into the reservoir 101 at time t41 and flows over the wall and the sensor 105. In this phase, the sensor 105 detects changing capacities due to the flow. Therefore, in phase p42, the measured value is not steady, i.e. stable. Therefore, as described above, the control unit 107 waits to adapt the trigger value and holds the trigger value high. This leads to a high, trigger delay. Between times t42 and t43, the measured value is steady and the control unit 107 adapts the trigger value until it is fixed at time t44. At time t45, the trigger rises again, following the measured value.

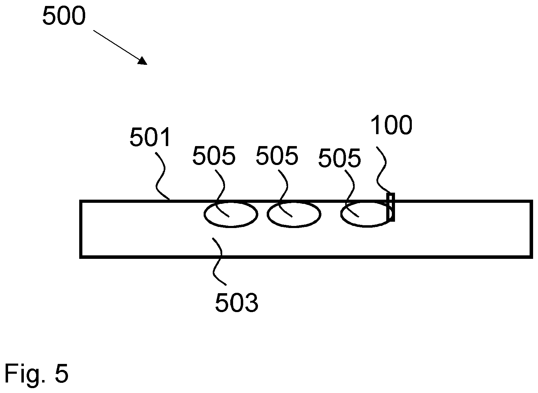

Fig. 5 shows an arrangement 500. The arrangement 500 comprises a pipe 501 filled with a medium 503 and the sensor system 100 arranged in a wall of the pipe, in particular at a top of the pipe, where it is expected that bubbles may be located.

In the pipe 501 bubbles 505 are located. The bubbles 505, in particular air bubbles, are unwanted disturbances in the medium in the pipe 501.

The sensor system 100 according to the embodiment of Fig. 5 is configured to detect the bubbles 505. The sensor 105 measures the capacity at the sensor tip. The dielectric characteristics of the medium and air are different in general, therefore, a change from the medium to air can be detected. In particular, the medium is a liquid.

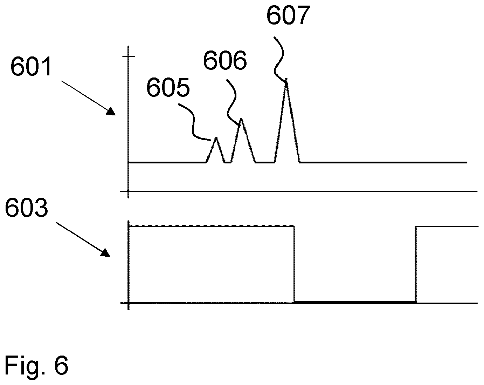

Fig. 6 shows two graphs 601 and 603. The graph 601 indicates the measured value of the sensor 105. The graph 603 indicates the output signal of the sensor system 100, in particular of the control unit 107.

The graph 601 shows three peaks 605, 606 and 607. Each peak represents one bubble 505, as the capacity measured by the sensor 105 rises at contact with air.

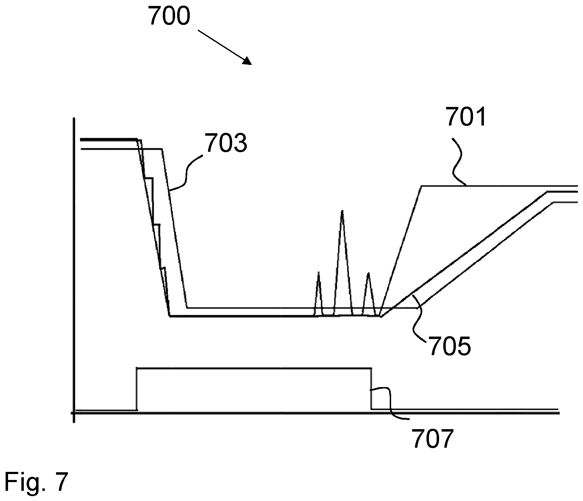

Fig. 7 shows a graph 700, with the time on the axis of abscissas.

Line 701 represents the measured value, line 703 represents the trigger value, as described above with reference to Fig. 2 and 4. A single bubble 505 does not change the trigger value, as the trigger value is, as described above, changed when the measured value is steady. One bubble causes a change in capacity, i.e. the measured value, too short to be regarded as steady.

To be able to detect bubbles, an additional trigger value is introduced, indicated in line 705. The additional trigger value indicates a sum of the time, where the measured value is above the steady value determined before. The integration time, i.e. the time between starting and ending to sum up, is preset and long enough to detect a plurality of bubbles 505, for example 2 seconds. During the integration time, the measured value is summed up. If the additional trigger reaches a predetermined threshold, it is detected that a critical amount of bubbles passed the sensor system 100.

Line 707 indicates the output of the sensor system 100 indicating the presence of the medium. After the amount of bubbles 505 is detected using the additional trigger line 705, the signal stops.

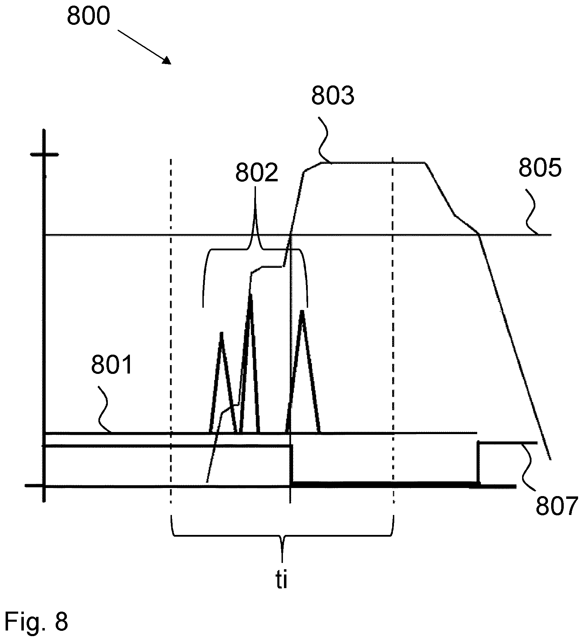

Fig. 8 shows in detail, how the additional trigger is used in another embodiment. The tree peaks 802 in the line 801 indicating the measured value, indicate bubbles 505, as described above. The line 803 indicates the accumulated measured values and rises while summing up the time in that the measured value is above the amount indicated by line 801 , in particular the steady value determined before, during the integration time ti. When the accumulated measured value 803 crosses a preset threshold 805 indicating a critical amount of air in the pipe 501, the sensor system 100 signal 807 changes and therefore indicates bubbles 505 in the pipe 501.

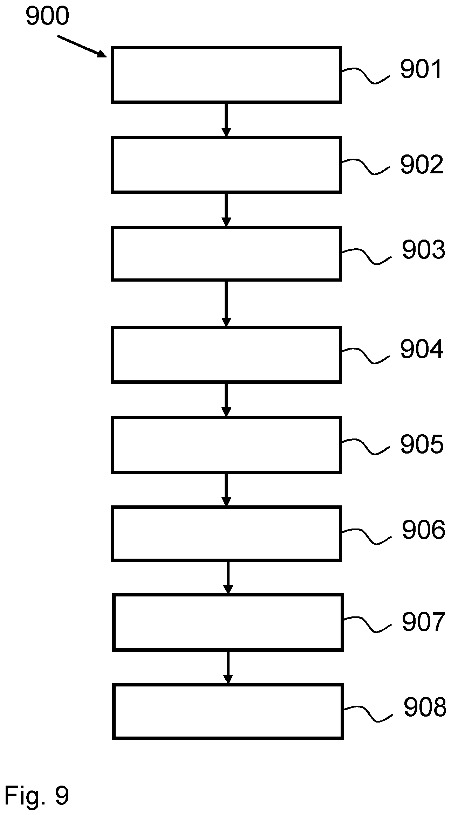

Fig. 9 shows a flowchart 900 of a method according to an embodiment.

In step 901, the sensor 105 detects a level of the medium 103. In the described embodiments, the sensor 105 measures the capacity at a sensor tip. In another embodiment, another value is measured. Different media has different dielectric properties and therefore, changes of the medium can be detected by the sensor 105. The capacity value of a measurement of air may be used as a reference.

In step 902, the sensor 105 outputs a measured value based on the detected level of the medium. Here a capacity value is provided as a measured value. In another embodiment, the measured value may be based on edited sensor values or provided with respect to a reference value.

In step 903, the control unit 107 provides a trigger value. The trigger value is mathematically comparable to the measured value. If the measured value crosses the trigger value, i.e. when a difference between the measured value and the trigger value is null, then a level change of the medium 103, 503 is detected. Dependent on the location of the sensor system 100, this may indicate whether the reservoir 101 is full or empty of half full. If the sensor system 100 is arranged in a pipe, a change of the flowing medium 503 can be detected.

In step 904, the trigger value is adapted by the control unit 107. The control unit 107 sets the trigger value to a value distant to the measured value after the measured value is steady.

In step 905, the control unit 107 has determined that the measured value is stable and an integration time ti (see Fig. 8) starts.

In step 906, a short increase of the measured value is detected and for the time of the increase an additional trigger value is generated by summing up a time value. The time value indicates the duration of the increased measured value with respect to the steady value.

In step 907, the integration of the time leads to an additional trigger value crossing a predetermined threshold. The control unit 107 is configured to identify a critical amount of bubbles 505 in the reservoir 101, in particular a pipe 501 or a hose, when the additional trigger value is equal to the predetermined threshold.

In Step 908, a warning signal is transmitted from the sensor system 100 towards a valve that is adapted to protect the pipe 501 from bubbles. In another embodiment the steps 905 to 908, comprising the bubble detection, are not performed.

## Claims

1. Sensor system (100) for detecting a level change in a reservoir (101), comprising
a capacitive level sensor (105) configured to measure a capacitance of a medium at a sensor tip, further configured to detect a level of a medium (103, 503) and to provide a measured value based on the level of the medium (103, 503);
a control unit (107) configured to provide a trigger value and to determine a level change if the measured value crosses the trigger value;
**characterized in that** the control unit (107) is configured to adapt the trigger value based on the measured value after the level change has been detected.

2. Sensor system (100) according to claim 1, wherein the level sensor (105) is a level switch configured to indicate if the tip of the level switch is covered by the medium.

3. Sensor system (100) according to one of the preceding claims, wherein the control unit (107) is configured to set the trigger value at a predetermined distance to the measured value, in particular with a distance of 5% of a maximum of the measured value.

4. Sensor system (100) according to one of the preceding claims, wherein the control unit (107) is configured to adapt the trigger value after an increase of the measured value or after a decrease of the measured value.

5. Sensor system (100) according to claim 4, wherein the control unit (107) is configured to set the trigger value below the measured value, if the measured value increased at the last level change.

6. Sensor system (100) according to claim 4 or 5, wherein the control unit (107) is configured to set the trigger value above the measured value, if the measured value decreased at the last level change.

7. Sensor system (100) according to one of the preceding claims, wherein the control unit (107) is configured to adapt the trigger value when the measured value has been constant for a predetermined number of measured values.

8. Sensor system (100) according to one of the preceding claims, wherein the control unit (107) is configured to sum up a time while the measured value is above a steady value and to indicate a level change when the sum rises above a predetermined threshold (805).

9. Sensor system (100) according to claim 8, wherein the control unit (107) is configured to stop indicating the level change after a predetermined time and no level change was detected within the predetermined time.

10. Method for detecting a level change in a reservoir (101), comprising
measuring a capacitance of a medium at a sensor tip by a capacitive level sensor (105);
detecting (901) a level of a medium (103) by the capacitive level sensor (105);
providing a measured value (902) by the level sensor (105) based on the detected level of the medium (103);
providing a trigger value (903) by a control unit (107) and determining a level change if the provided measured value crosses the trigger value;
**characterized in that** the method further comprises the step of adapting the trigger value (904) dependent on the measured value after the level change has been detected.

11. Method according to claim 10, wherein adapting the trigger value (904) comprises adapting the trigger value to follow the measured value after the measured value was constant for a predetermined number of measured values.

12. Method according to claims 10 or 11, wherein adapting the trigger value comprises setting the trigger value to a value above the measured value upon detecting a decrease of the measured value.

13. Method according to claims 10 to 12, wherein adapting the trigger value comprises setting the trigger value to a value below the measured value upon detecting an increase of the measured value.

14. Method according to claims 10 to 13, comprising summing up (906) a time while the measured value is above a steady value and outputting a warning signal, when the sum rises above a predetermined threshold (805).

15. Method according to claim 14, wherein the warning signal is configured to control a bubble elimination arrangement configured to eliminate bubbles, in particular to control a valve to open.

## Patentansprüche

1. Sensorsystem (100) zum Erfassen einer Füllstandsänderung in einem Behälter (101), für
einen kapazitiven Füllstandsensor (105), der so konfiguriert ist, dass er eine Kapazität eines Mediums an einer Sensorspitze misst, und der ferner so konfiguriert ist, dass er einen Füllstand eines Mediums (103, 503) erfasst und einen Messwert auf der Grundlage des Füllstands des Mediums (103, 503) bereitstellt;
eine Steuereinheit (107), die so konfiguriert ist, dass sie einen Triggerwert bereitstellt und eine Füllstandsänderung bestimmt, wenn der gemessene Wert den Triggerwert überschreitet;
**dadurch gekennzeichnet, dass** die Steuereinheit (107) so konfiguriert ist, dass sie den Triggerwert auf der Grundlage des gemessenen Wertes anpasst, nachdem die Füllstandsänderung festgestellt wurde.

2. Sensorsystem (100) nach Anspruch 1, wobei der Füllstandsensor (105) ein Füllstandsschalter ist, der so konfiguriert ist, dass er anzeigt, ob die Spitze des Füllstandsschalters von dem Medium bedeckt ist.

3. Sensorsystem (100) nach einem der vorhergehenden Ansprüche, wobei die Steuereinheit (107) so konfiguriert ist, dass sie den Triggerwert in einem vorbestimmten Abstand zu dem gemessenen Wert setzt, insbesondere mit einem Abstand von 5% eines Maximums des gemessenen Wertes.

4. Sensorsystem (100) nach einem der vorhergehenden Ansprüche, wobei die Steuereinheit (107) so konfiguriert ist, dass sie den Triggerwert nach einem Anstieg des Messwerts oder nach einem Abfall des Messwerts anpasst.

5. Sensorsystem (100) nach Anspruch 4, wobei die Steuereinheit (107) so konfiguriert ist, dass sie den Triggerwert unter den Messwert setzt, wenn der Messwert bei der letzten Füllstandsänderung gestiegen ist.

6. Sensorsystem (100) nach Anspruch 4 oder 5, wobei die Steuereinheit (107) so konfiguriert ist, dass sie den Triggerwert über den gemessenen Wert setzt, wenn der gemessene Wert bei der letzten Füllstandsänderung gesunken ist.

7. Sensorsystem (100) nach einem der vorhergehenden Ansprüche, wobei die Steuereinheit (107) so konfiguriert ist, dass sie den Triggerwert anpasst, wenn der Messwert für eine vorgegebene Anzahl von Messwerten konstant war.

8. Sensorsystem (100) nach einem der vorhergehenden Ansprüche, wobei die Steuereinheit (107) so konfiguriert ist, dass sie eine Zeit aufsummiert, während der Messwert über einem konstanten Wert liegt, und dass sie eine Füllstandsänderung anzeigt, wenn die Summe über einen vorbestimmten Schwellenwert (805) ansteigt.

9. Sensorsystem (100) nach Anspruch 8, wobei die Steuereinheit (107) so konfiguriert ist, dass sie die Anzeige der Füllstandsänderung nach einer vorbestimmten Zeit beendet und innerhalb der vorbestimmten Zeit keine Füllstandsänderung festgestellt wurde.

10. Verfahren zum Erfassen einer Füllstandsänderung in einem Behälter (101), für
das Messen einer Kapazität eines Mediums an einer Sensorspitze durch einen kapazitiven Füllstandssensor (105);
das Erfassen (901) eines Füllstands eines Mediums (103) durch den kapazitiven Füllstandssensor (105);
das Bereitstellen eines Messwerts (902) durch den Füllstandsensor (105) auf der Grundlage des erfassten Füllstands des Mediums (103);
das Bereitstellen eines Triggerwertes (903) durch eine Steuereinheit (107) und Bestimmen einer Füllstandsänderung, wenn der bereitgestellte Messwert den Triggerwert überschreitet;
**dadurch gekennzeichnet, dass** das Verfahren ferner den Schritt umfasst, den Triggerwert (904) in Abhängigkeit von dem gemessenen Wert anzupassen, nachdem die Füllstandsänderung festgestellt wurde.

11. Verfahren nach Anspruch 10, wobei das Anpassen des Triggerwerts (904) das Anpassen des Triggerwerts umfasst, um dem Messwert zu folgen, nachdem der Messwert für eine vorbestimmte Anzahl von Messwerten konstant war.

12. Verfahren nach Anspruch 10 oder 11, wobei das Anpassen des Triggerwerts das Setzen des Triggerwerts auf einen Wert oberhalb des gemessenen Werts nach dem Erkennen einer Abnahme des gemessenen Werts umfasst.

13. Verfahren nach einem der Ansprüche 10 bis 12, wobei das Anpassen des Triggerwertes das Setzen des Triggerwertes auf einen Wert unterhalb des gemessenen Wertes beim Erkennen eines Anstiegs des gemessenen Wertes umfasst.

14. Verfahren nach einem der Ansprüche 10 bis 13, umfassend das Aufsummieren (906) einer Zeit, während der gemessene Wert über einem konstanten Wert liegt, und Ausgeben eines Warnsignals, wenn die Summe über einen vorbestimmten Schwellenwert (805) ansteigt.

15. Verfahren nach Anspruch 14, wobei das Warnsignal so konfiguriert ist, dass es eine Anordnung zur Beseitigung von Blasen steuert, die so konfiguriert ist, dass sie Blasen beseitigt, insbesondere dass sie ein Ventil zum Öffnen steuert.

## Revendications

1. Système de détection (100) permettant de détecter un changement de niveau dans un réservoir (101), comprenant
un détecteur de niveau capacitif (105) conçu pour mesurer une capacité d'un fluide à une pointe de détecteur, conçu en outre pour détecter un niveau d'un fluide (103, 503) et pour fournir une valeur mesurée sur la base du niveau du fluide (103, 503) ;
une unité de commande (107) conçue pour fournir une valeur de déclenchement et pour déterminer un changement de niveau si la valeur mesurée croise la valeur de déclenchement ;
**caractérisé en ce que** l'unité de commande (107) est conçue pour adapter la valeur de déclenchement sur la base de la valeur mesurée après que le changement de niveau a été détecté.

2. Système de détection (100) selon la revendication 1, dans lequel le détecteur de niveau (105) est un contacteur de niveau conçu pour indiquer si la pointe du contacteur de niveau est recouverte par le fluide.

3. Système de détection (100) selon l'une des revendications précédentes, dans lequel l'unité de commande (107) est conçue pour régler la valeur de déclenchement à une distance prédéfinie à la valeur mesurée, en particulier avec une distance de 5 % d'un maximum de la valeur mesurée.

4. Système de détection (100) selon l'une des revendications précédentes, dans lequel l'unité de commande (107) est conçue pour adapter la valeur de déclenchement après une augmentation de la valeur mesurée ou après une diminution de la valeur mesurée.

5. Système de détection (100) selon la revendication 4, dans lequel l'unité de commande (107) est conçue pour régler la valeur de déclenchement au-dessous de la valeur mesurée, si la valeur mesurée a augmenté au dernier changement de niveau.

6. Système de détection (100) selon la revendication 4 ou 5, dans lequel l'unité de commande (107) est conçue pour régler la valeur de déclenchement au-dessus de la valeur mesurée, si la valeur mesurée a diminué au dernier changement de niveau.

7. Système de détection (100) selon l'une des revendications précédentes, dans lequel l'unité de commande (107) est conçue pour adapter la valeur de déclenchement lorsque la valeur mesurée a été constante pour un nombre prédéfini de valeurs mesurées.

8. Système de détection (100) selon l'une des revendications précédentes, dans lequel l'unité de commande (107) est conçue pour additionner une durée pendant laquelle la valeur mesurée est supérieure à une valeur stable et pour indiquer un changement de niveau lorsque la somme dépasse un seuil prédéfini (805).

9. Système de détection (100) selon la revendication 8, dans lequel l'unité de commande (107) est conçue pour cesser d'indiquer le changement de niveau après une durée prédéfinie et si aucun changement de niveau n'a été détecté pendant la durée prédéfinie.

10. Procédé de détection d'un changement de niveau dans un réservoir (101), comprenant les étapes consistant à
mesurer une capacité d'un fluide à la pointe d'un détecteur par un détecteur de niveau capacitif (105) ;
détecter (901) un niveau d'un fluide (103) par un détecteur de niveau capacitif (105) ;
fournir une valeur mesurée (902) par le détecteur de niveau (105) sur la base du niveau détecté du fluide (103) ;
fournir une valeur de déclenchement (903) par une unité de commande (107) et déterminer un changement de niveau si la valeur mesurée fournie croise la valeur de déclenchement ;
**caractérisé en ce que** le procédé comprend, en outre, l'état consistant à adapter la valeur de déclenchement (904) en fonction de la valeur mesurée après que le changement de niveau a été détecté.

11. Procédé selon la revendication 10, l'étape d'adaptation de la valeur de déclenchement (904) consistant à adapter la valeur de déclenchement pour suivre la valeur mesurée après que la valeur mesurée a été constante pendant un nombre prédéfini de valeurs mesurées.

12. Procédé selon les revendications 10 ou 11, l'étape d'adaptation de la valeur de déclenchement consistant à régler la valeur de déclenchement à une valeur supérieure à la valeur mesurée lors de la détection d'une diminution de la valeur mesurée.

13. Procédé selon les revendications 10 à 12, l'étape d'adaptation de la valeur de déclenchement consistant à régler la valeur de déclenchement à une valeur inférieure à la valeur mesurée lors de la détection d'une augmentation de la valeur mesurée.

14. Procédé selon les revendications 10 à 13, comprenant l'étape consistant à additionner (906) une durée pendant laquelle la valeur mesurée est supérieure à une valeur stable et à émettre un signal d'avertissement, lorsque la somme dépasse un seuil prédéfini (805).

15. Procédé selon la revendication 14, le signal d'avertissement étant conçu pour commander un agencement d'élimination de bulles conçu pour éliminer des bulles, en particulier pour commander l'ouverture d'une vanne.
